(19) Europäisches Patentamt

European Patent Office

Office européen des brevets

(11) **EP 4 289 699 A1**

(12) **EUROPEAN PATENT APPLICATION**

(43) Date of publication:
**13.12.2023 Bulletin 2023/50**

(21) Application number: **22216936.9**

(22) Date of filing: **28.12.2022**

(51) International Patent Classification (IPC):
***B60W 60/00*** *(2020.01)*

(52) Cooperative Patent Classification (CPC):
**B60W 60/0059;** B60W 2554/80; B60W 2556/40;
B60W 2556/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022 CN 202210641992**

(71) Applicant: **Zhiji Automotive Technology Co., Ltd.
Shanghai 201210 (CN)**

(72) Inventors:
• **Liu, Ting
Shanghai, 201210 (CN)**

• **Ji, Peng
Shanghai, 201210 (CN)**
• **Huang, Liyuan
Shanghai, 201210 (CN)**
• **Chu, Yongqiang
Shanghai, 201210 (CN)**
• **He, Jinpeng
Shanghai, 201210 (CN)**

(74) Representative: **Gunzelmann, Rainer
Wuesthoff & Wuesthoff
Patentanwälte PartG mbB
Schweigerstraße 2
81541 München (DE)**

(54) **TRUST ENHANCEMENT METHOD AND APPARATUS FOR INTELLIGENT DRIVING SYSTEM**

(57) The present disclosure provides a trust enhancement method and a trust enhancement apparatus for an intelligent driving system. The method comprises: acquiring at least one of vehicle operating status data, navigation route information, perception fusion and target tracking data, and high-precision map fusion information of the intelligent driving system of a vehicle; and determining a reliability of the intelligent driving system based on the at least one of the vehicle operating status data, the navigation route information, the perception fusion and target tracking data, and the high-precision map fusion information.

EP 4 289 699 A1

**Description**

**CROSS-REFERENCE TO RELATED APPLICATIONS**

This disclosure claims priority to CN Patent Application No. 202210641992.0, filed on June 08, 2022 and titled "TRUST ENHANCEMENT METHOD AND APPARATUS FOR INTELLIGENT DRIVING SYSTEM", the entire contents of which are incorporated by reference herein in their entireties.

**TECHNICAL FIELD**

The present disclosure relates to a trust enhancement method and a trust enhancement apparatus for an intelligent driving system.

**BACKGROUND**

Before the arrival of completely unmanned driving, it will experience a long period of human-machine co-driving. Thus, trust and privity must be established between the human and the machine, so that users may enjoy the true value brought by the intelligent driving in a comfortable and pleasant experience.

At present, the mainstream intelligent driving system has only two gears, i.e., ON and OFF, for the control of the status of its own system capability. Only when the intelligent driving system exits under the dangerous working condition, the emergency alarm is issued to make the takeover reminder. This will cause the user to be nervous in the process of using the intelligent driving, resulting in driving anxiety.

**SUMMARY**

The present disclosure provides a trust enhancement method and a trust enhancement device for an intelligent driving system.

According to an aspect of the present disclosure, a trust enhancement method for an intelligent driving system is provided. The trust enhancement method includes:

acquiring at least one of vehicle operating status data, navigation route information, perception fusion and target tracking data, and high-precision map fusion information of the intelligent driving system of a vehicle; and

determining a reliability of the intelligent driving system based on the at least one of the vehicle operating status data, the navigation route information, the perception fusion and target tracking data, and the high-precision map fusion information.

In some embodiments, determining the reliability of the intelligent driving system based on the at least one of the vehicle operating status data, the navigation route information, the perception fusion and target tracking data, and the high-precision map fusion information includes:

calculating an earliest merging point and a latest merging point in each lane for the vehicle in a scene where a main road merges into a ramp, based on the vehicle operating status data, the navigation route information, and the high-precision map fusion information;

when the vehicle travels in a lane to the earliest merging point in the lane, determining an off ramp task reliability for static factor based on the latest merging point in the lane;

determining a number of safety spaces where the vehicle changes from a current lane to an adjacent lane based on the perception fusion and target tracking data and the vehicle operating status data, and determining an off ramp task reliability for dynamic traffic based on the number of the safety spaces; and

determining the reliability of the intelligent driving system based on the off ramp task reliability for static factor and the off ramp task reliability for dynamic traffic.

In some embodiments, calculating the earliest merging point and the latest merging point in each lane for the vehicle in the scene where the main road merges into the ramp, based on the vehicle operating status data, the navigation route information, and the high-precision map fusion information comprises:

acquiring a navigation destination, and obtaining the navigation route information based on the navigation destination and a high-precision map; and

obtaining the high-precision map fusion information according to the navigation route information and the vehicle operating status data, and calculating the earliest merging point and the latest merging point in each lane for the vehicle in the scene where the main road merges into the ramp based on the high-precision map fusion information.

In some embodiments, calculating the latest merging point in each lane for the vehicle in the scene where the main road merges into the ramp based on the high-precision map fusion information comprises:

obtaining a lane location, a number of lanes, a distance from the vehicle to a ramp junction, an experienced vehicle speed in each lane, average lane changing time for each lane, and a shortest interval time between two lane changes for each lane based on the high-precision map fusion information; and
calculating the latest merging point in each lane for the vehicle in the scene where the main road merges into the ramp based on the lane location, the number of the lanes, the distance from the vehicle to the ramp junction, the experienced vehicle speed in each lane, the average lane changing time for each lane, and the shortest interval time between the two lane changes for each lane.

In some embodiments, calculating the latest merging point in each lane for the vehicle in the scene where the main road merges into the ramp based on the lane location, the number of the lanes, the distance from the vehicle to the ramp junction, the experienced vehicle speed in each lane, the average lane changing time for each lane, and the shortest interval time between the two lane changes for each lane comprises:

calculating a distance $X_{min,n}$ from the latest merging point in each lane for the vehicle in the scene where the main road merges into the ramp to the ramp junction by following formula:

$$X_{min,n} = \sum_{i=1}^{n} S_i + \sum_{i=1}^{n-1} \Delta S_i;$$

$$S_n = V_n * t_1;$$

$$\Delta S_n = V_n * t_2;$$

where n represents a serial number of a lane, $t_1$ is the average lane changing time of the vehicle, $t_2$ is the shortest interval time between the two lane changes, and $v_i$ is the experienced vehicle speed in lane i.

In some embodiments, calculating the earliest merging point in each lane for the vehicle in the scene where the main road merges into the ramp based on the high-precision map fusion information comprises:

obtaining a length of a ramp junction passage, an intelligent driving style influence coefficient and a navigation traffic congestion information influence coefficient based on the high-precision map fusion information; and
calculating the earliest merging point in each lane for the vehicle in the scene where the main road merges into the ramp based on the length of the ramp junction, the intelligent driving style influence coefficient, and the navigation traffic congestion information influence coefficient.

In some embodiments, calculating the earliest merging point in each lane for the vehicle in the scene where the main road merges into the ramp based on the length of the ramp junction, the intelligent driving style influence coefficient, and the navigation traffic congestion information influence coefficient comprises:

calculating a distance $X_{max,n}$ from the earliest merging point in each lane for the vehicle in the scene where the main road merges into the ramp to the ramp junction by following formula:

$$X_{max,n} = \sum_{i=1}^{n-1} S_i' * K_{intelligent\ driving\ style} * K_{congestion} + S_{exit};$$

where $n$ represents a serial number of a lane, $S_{exit}$ is the length of the ramp junction passage; $K_{intelligent\ driving\ style}$ is the intelligent driving style influence coefficient, $K_{intelligent\ driving\ style}$ represents an influence coefficient of the intelligent driving style on $S_i'$ ; $K_{congestion}$ is the navigation traffic congestion information influence coefficient,

$K_{congestion}$ represents an influence coefficient of the navigation traffic congestion information on $S_i'$; and $S_i'$ is an earliest lane changing distance that needs to be advanced to change from a current lane to an adjacent lane on right.

In some embodiments, when the vehicle travels in the lane to the earliest merging point in the lane, determining the off ramp task reliability for static factor based on the latest merging point in the lane comprises:

obtaining a current vehicle speed of the vehicle and a real-time distance from the latest merging point in the lane currently located based on the vehicle operating status data, the navigation route information, and the high-precision map fusion information; and
determining the off ramp task reliability for static factor based on the current vehicle speed of the vehicle and the real-time distance from the latest merging point in the lane currently located.

In some embodiments, determining the off ramp task reliability for static factor based on the current vehicle speed of the vehicle and the real-time distance from the latest merging point in the lane currently located comprises:

determining the off ramp task reliability $F(X_n)$ for static factor based on following formula:

$$TTC_n = \frac{X_n}{v};$$

wherein $X_n$ represents the real-time distance of the vehicle from the latest merging point in the lane currently located;
$v$ represents the current vehicle speed of the vehicle;
the larger $TTC_n$ is, the larger $F(X_n)$ is, and the smaller the $TTC_n$ is, the smaller $F(X_n)$ is.

In some embodiments, determining the off ramp task reliability $F(N)$ for dynamic traffic based on the number of the safety spaces comprises:
if the number N of the safety spaces is greater, determining that the off ramp task reliability $F(N)$ for dynamic traffic is greater.
In some embodiments, determining the reliability of the intelligent driving system based on the off ramp task reliability for static factor and the off ramp task reliability for dynamic traffic comprises:

determining the reliability F of the intelligent driving system based on following formula:

$$F = k_1 * F(X_n) + k_2 * F(N);$$

wherein $k_1$ represents an influence weight of $F(X_n)$ on the reliability F of the intelligent driving system; and
$k_2$ represents an influence weight of $F(N)$ on the reliability F of the intelligent driving system.

According to another aspect of the present application, a computer readable medium is provided, on which computer readable instructions are stored, wherein the computer readable instructions are executable by a processor to implement the method described above.
According to another aspect of the present application, an apparatus for information processing on a network apparatus side is provided, including a memory for storing computer program instructions and a processor for executing program instructions, wherein the computer program instructions trigger the apparatus to execute the method described above when being executed by the processor.
According to another aspect of the present application, a trust enhancement apparatus for an intelligent driving system is provided. The trust enhancement apparatus includes:

an acquiring unit, configured to acquire at least one of vehicle operating status data, navigation route information, perception fusion and target tracking data, and high-precision map fusion information of the intelligent driving system of a vehicle; and
a determining unit, configured to determine a reliability of the intelligent driving system based on the at least one of the vehicle operating status data, the navigation route information, the perception fusion and target tracking data, and the high-precision map fusion information.

According to another aspect of the present application, a computer program product is provided, including computer program instructions, wherein the computer program instructions implement the method described above when being executed by a processor.

In summary, in the present disclosure, the reliability of the intelligent driving system is determined based on one or any combination of the vehicle operating status data, the navigation route information, the perception fusion and target tracking data, and the high-precision map fusion data, such that the reliability of the entire intelligent driving system may be calculated correctly, thereby informing the consumers the ability of the intelligent driving system to respond to the current and future complex scenes, so as to relieve the psychological tension of the users, to improve the effective communication between the human-machine co-driving, to increase the information transparency in the process of the human-machine co-driving, to improve the users' trust in the intelligent driving system, which solves the problem of the users' fear and distrust of the intelligent driving system in the process of using intelligent driving.

## BRIEF DESCRIPTION OF THE DRAWINGS

FIG. 1 is a flow diagram of the trust enhancement method for the intelligent driving system according to an embodiment of the present disclosure;

FIG. 2 is a schematic diagram of the trust enhancement method for the intelligent driving system according to an embodiment of the present disclosure;

FIG. 3 is a flow diagram of step S2 in the trust enhancement method for the intelligent driving system according to a particular embodiment of the present disclosure;

FIG. 4 is a diagram of the earliest merging point and the latest merging points according to an embodiment of the present disclosure;

FIG. 5 is a block diagram of the trust enhancement apparatus for the intelligent driving system according to an embodiment of the present disclosure;

FIG. 6 is a block diagram of the apparatus for information processing on a network apparatus side according to an embodiment of the present disclosure.

## DETAILED DESCRIPTION

The present disclosure will be described in further detail below in conjunction with the accompanying drawings.

In a typical configuration of the present disclosure, the terminal, the apparatus of the service network, and the trustee each include one or more processors (CPU), the input/output interface, the network interface, and the internal storage.

The internal storage may include the non-permanent memory in the computer readable medium, the random access memory (RAM) and/or the non-volatile internal storage, and other forms., such as the read only memory (ROM) or the flash (flash RAM). The internal storage is an example of the computer readable medium.

The computer readable medium includes permanent and non-permanent medium, removable and non-removable medium, and information storage may be implemented by any method or technology. The information may be computer readable instructions, data structures, program modules, or other data. Examples of the computer storage medium include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other flash technology, a CD-ROM, a digital versatile disc (DVD) or other optical storage, magnetic cassettes, magnetic tape disk storage or other magnetic storage apparatuses or any other non-transmission medium which may be used to store information that may be accessed by a computing apparatus. According to the definition herein, the computer readable medium does not include non-transitory computer readable medium (transitory media), such as modulated data signals and carrier waves.

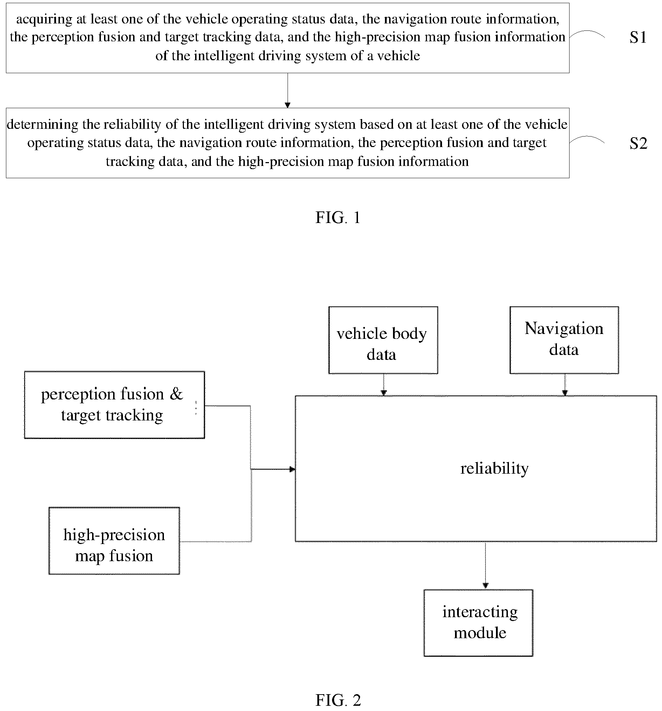

As shown in FIGs. 1 and 2, an aspect of the present disclosure provides a trust enhancement method for an intelligent driving system. The method may include:

step S 1, acquiring at least one of the vehicle operating status data, the navigation route information, the perception fusion and target tracking data, and the high-precision map fusion information of the intelligent driving system of the vehicle.

Specifically, the vehicle operating status data refers to the operating status data of the vehicle itself, such as the vehicle speed, the wheel speed, the lateral and longitude acceleration and deceleration, the vehicle light status, the positioning status, and the vehicle body posture. The vehicle operating status data may be used for deciding the influence of the ego vehicle's hardware status on the authority control, and whether it meets the control requirement of the intelligent driving system, so as to calculate the ability of the intelligent driving system to respond to different scenes.

The navigation route information refers to the expected information of the travelling route and the surrounding environment where the vehicle located, such as the intersection information, the road congestion information, the weather information, the tunnel information, the construction information and the like. The navigation route information may be used for estimating the complexity of the environment, so as to calculate the ability of the intelligent driving system to respond to different scenes.

The perceptual fusion and target tracking data refers to the surrounding environment information of the vehicle, such as the obstacle and the lane line information. The perceptual fusion and target tracking data may be used for deciding the safety space of the vehicle during the control process of the intelligent driving system, for predicting the influence of the trajectory of another vehicle on the travelling trajectory of the ego vehicle, etc., so as to calculate the ability of the intelligent driving system to respond to different scenes.

The high-precision map fusion information refers to the expected information of the travelling route and the surrounding environment of the vehicle obtained from the high-precision map information in combination with the positioning information in the vehicle operating status data, such as the distance from the ramp junction, the position of the lane located, and the curvature radius of the current road curve and the road curve ahead. The high-precision map fusion information is used for deciding the complexity of the current and estimated environment, so as to calculate and predict the ability of the intelligent driving system to respond to different scenes, such as the off ramp success rate and the turning success rate.

As shown in FIGs, 1 and 2, the trust enhancement method for the intelligent driving system further includes: step S2, determining the reliability of the intelligent driving system based on at least one of the vehicle operating status data, the navigation route information, the perception fusion and target tracking data, and the high-precision map fusion information.

Here, the reliability refers to the ability of the entire intelligent driving system to respond to current and future complex scenes.

The calculation of the reliability may integrate three dimensions, including the complexity of the current and future environments, the system hardware capability and the influence of the environment thereon, as well as the software algorithm capability and the influence of the environment thereon, so as to obtain the reliability of the intelligent driving system by the comprehensive judgment. The hardware capability includes, for example, the perception system capability, the executor capability, the controller capability, and the like. The software algorithm capability includes, for example, the perception module, the fusion module, the authority control module, the prediction module, and the like.

The data source for the calculation of the reliability of the present disclosure is based on all or part of the data such as the vehicle operating status data, the navigation route information, the perception fusion and target tracking data, the high-precision map fusion data, and the like.

The decision may be made comprehensively by the reliability calculating module based on the vehicle operating status data, the navigation route information, the perception fusion and target tracking data, the high-precision map fusion information, and the like, wherein different data have different weights of influence on the reliability, and the reliability may change as the current environment. The weights of different dimensions change in real-time based on the current environment, the urgency of various task, and the degree of influence on the intelligent driving system.

In the present disclosure, the reliability of the intelligent driving system is determined based on at least one of the vehicle operating status data, the navigation route information, the perception fusion and target tracking data, and the high-precision map fusion data, such that the reliability of the entire intelligent driving system may be calculated correctly, so as to inform the consumer the ability of the intelligent driving system to respond to the current and future complex scenes, to relieve the psychological tension of the user, to improve the effective communication in the human-machine co-driving, to increase the information transparency in the process of human-machine co-driving, to enhance the user's trust in the intelligent driving system, which solves the problem of the users' fear and distrust of the intelligent driving system in the process of using intelligent driving.

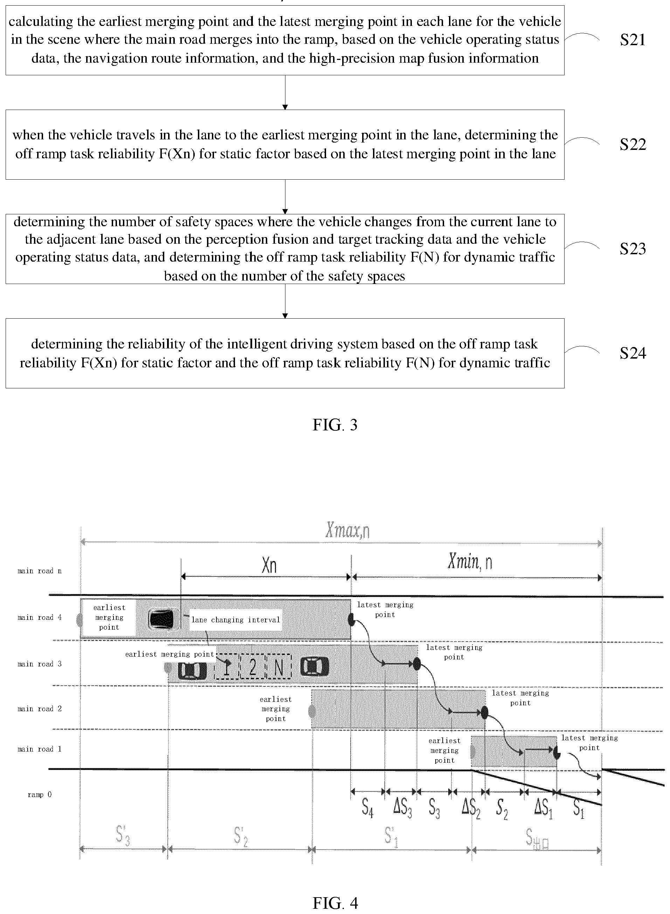

In some embodiments of the present disclosure, as shown in FIG. 3, step S2 may include:

step S21, calculating the earliest merging point and the latest merging point in each lane for the vehicle in the scene where the main road merges into the ramp, based on the vehicle operating status data, the navigation route information, and the high-precision map fusion information;

step S22, when the vehicle travels in a certain lane to the earliest merging point in the lane, determining the off ramp task reliability $F(X_n)$ for static factor based on the latest merging point in the lane;

step S23, determining the number of the safety spaces where the vehicle changes from the current lane to the adjacent lane based on the perception fusion and target tracking data and the vehicle operating status data, and determining the off ramp task reliability $F(N)$ for dynamic traffic based on the number of the safety spaces; and

step S24, determining the reliability of the intelligent driving system based on the off ramp task reliability $F(Xn)$ for static factor and the off ramp task reliability *F*(*N*) for dynamic traffic.

Here, the present embodiment may determine the reliability of the intelligent driving system more reliably by the two dimensions of the static factor and the dynamic traffic.

In some embodiments of the present disclosure, step S21 may include:
step S211, acquiring the navigation destination, and obtaining the navigation route information based on the navigation destination and the high-precision map.

Here, in the process that the intelligent driving system controls the vehicle automatically, the driver may set the navigation destination by the center controller screen, and the high-precision map receives the navigation destination to acquire the navigation route information on the route, such as the position of the ramp junction and the number of the lanes, thereby planning the trajectory in advance.

In addition, step S21 may further include:
step S212, obtaining the high-precision map fusion information according to the navigation route information and the vehicle operating status data, and calculating the earliest merging point and the latest merging point in each lane for the vehicle in the scene where the main road merges into the ramp based on the high-precision map fusion information.

Here, the intelligent driving system may decide the lane where the ego vehicle is located and the position from the ramp junction in real-time according to the navigation route information and the vehicle operating status data, and calculate the earliest and latest merging points in each lane in combination with the expected vehicle speed, wherein the vehicle operating status data may include the positioning information of the ego vehicle.

In this embodiment, the earliest merging point and the latest merging point in each lane for the vehicle in the scene where the main road merges into the ramp may be calculated accurately.

In some embodiments of the present disclosure, calculating the latest merging point in each lane for the vehicle in the scene where the main road merges into the ramp based on the high-precision map fusion information may include:

step S2121, obtaining the lane location, the number of the lanes, the distance from the vehicle to the ramp junction, the experienced vehicle speed in each lane, the average lane changing time for each lane, and the shortest interval time between two lane changes for each lane based on the high-precision map fusion information; and
step S2122, calculating the latest merging point in each lane for the vehicle in the scene where the main road merges into the ramp based on the lane location, the number of the lanes, the distance from the vehicle to the ramp junction, the experienced vehicle speed in each lane, the average lane changing time for each lane, and the shortest interval time between the two lane changes for each lane.

Here, the intelligent driving system may decide the lane where the ego vehicle is located and the position from the ramp junction in real-time based on the navigation route information and the vehicle operating status data, and calculate the latest merging point in each lane in combination with the expected vehicle speed, wherein the vehicle operating status data may include the positioning information of the ego vehicle.

In this embodiment, the latest merging point in each lane for the vehicle in the scene where the main road merges into the ramp may be calculated accurately.

In some embodiments of the present disclosure, step S2122 may include:

calculating the distance $X_{min,n}$ from the latest merging point in each lane for the vehicle in the scene where the main road merges into the ramp to the ramp junction by the following formula:

$$X_{min,n} = \sum_{i=1}^{n} S_i + \sum_{i=1}^{n-1} \Delta S_i;$$

$$S_n = V_n * t_1;$$

$$\Delta S_n = V_n * t_2;$$

where n represents the serial number of the lane, as shown in FIG. 4, the serial number n of the lane is main road 1~4; $t_1$ is the average lane changing time of the vehicle, for example, $t_1$ may be between 4.5-7 s; $t_2$ is the shortest interval time between the two lane changes, for example, $t_2$ may be between 0-3 s; and $v_i$ is the experienced vehicle speed of lane i.

As shown in FIG. 4, one latest merging point in each lane may be obtained.

$v_i$, $t_1$, and $t_2$ may be the calibration quantities, and it is necessary to adjust the results that best meet the experience according to the result of road test.

In this embodiment, the latest merging point in each lane for the vehicle in the scene where the main road merges into the ramp may be calculated accurately.

In some embodiments of the present disclosure, calculating the earliest merging point in each lane for the vehicle in the scene where the main road merges into the ramp based on the high-precision map fusion information may include:

step S2123, obtaining the length of the ramp junction passage, the intelligent driving style influence coefficient and the navigation traffic congestion information influence coefficient based on the high-precision map fusion information; and

step S2124, calculating the earliest merging point in each lane for the vehicle in the scene where the main road merges into the ramp based on the length of the ramp junction, the intelligent driving style influence coefficient, and the navigation traffic congestion information influence coefficient.

Here, in this embodiment, the earliest merging point in each lane may be obtained.

In this embodiment, the earliest merging point in each lane for the vehicle in the scene where the main road merges into the ramp may be calculated accurately.

In some embodiments of the present disclosure, step S2124 may include:

calculating the distance $X_{max,n}$ from the earliest merging point in each lane for the vehicle in the scene where the main road merges into the ramp to the ramp junction by the following formula:

$$X_{max,n} = \sum_{i=1}^{n-1} S_i' * K_{intelligent\ driving\ style} * K_{congestion} + S_{exit};$$

where n represents the serial number of the lane, as shown in FIG. 4, the serial number n of the lane is main road 1~4; $S_{exit}$ is the length of the ramp junction passage; $K_{intelligent\ driving\ style}$ is the intelligent driving style influence coefficient, $K_{intelligent\ driving\ style}$ represents the influence coefficient of the intelligent driving style on $S_i'$; $K_{congestion}$ is the navigation traffic congestion information influence coefficient, $K_{congestion}$ represents the influence coefficient of the navigation traffic congestion information on $S_i'$; and $S_i'$ is the earliest lane changing distance that needs to be advanced to change from the current lane to the adjacent lane on right.

Here, $S_i'$ is the earliest lane changing distance that needs to be advanced to change from the current lane to the adjacent lane on the right, $S_i'$ may be a calibration quantity, and the result of $S_i'$ that best meets the experience may be adjusted according to the result of road test.

$K_{intelligent\ driving\ style}$ is the influence coefficient of the intelligent driving style on $S_i'$. $K_{intelligent\ driving\ style} > 1$ refers to a more stable intelligent driving style; and $K_{intelligent\ driving\ style} < 1$ refers to a more radical intelligent driving style. $K_{intelligent\ driving\ style}$ may be a calibration quantity, the result that best meets the experience may be adjusted according to the result of road test.

$K_{congestion}$ is the influence coefficient of the navigation traffic congestion information on $S_i'$. If there is no traffic congestion information, then $K_{congestion} = 1$. If the navigation releases the traffic congestion information, then $K_{congestion} > 1$. $K_{congestion}$ may be a calibration quantity, and the result that best meets the experience may be adjusted according to the result of road test.

In this embodiment, the earliest merging point in each lane for the vehicle in the scene where the main road merges into the ramp may be calculated accurately.

In some embodiments of the present disclosure, step S22 may include:

step S221, obtaining the current vehicle speed of the vehicle and the real-time distance from the latest merging point in the lane currently located based on the vehicle operating status data, the navigation route information, and the high-precision map fusion information; and
step S222, determining the off ramp task reliability $F(X_n)$ for static factor based on the current vehicle speed of the vehicle and the real-time distance from the latest merging point in the lane currently located.

In some embodiments of the present disclosure, step S222 may include:

determining the off ramp task reliability $F(X_n)$ for static factor based on the following formula:

$$TTC_n = \frac{X_n}{v};$$

wherein $X_n$ represents the real-time distance of the vehicle from the latest merging point in the lane currently located; $v$ represents the current vehicle speed of the vehicle; the larger $TTC_n$ is, the larger $F(X_n)$ is, and the smaller the $TTC_n$ is, the smaller $F(X_n)$ is.

Here, the intelligent driving system may decide the time and distance information $TTC_n$ from the latest merging point in combination with the real-time vehicle speed of the ego vehicle, the positioning information, and the like in the vehicle operating status data, and the high-precision map information, so as to calculate and to obtain the off ramp task reliability $F(X_n)$ for static factor accurately.
In some embodiments of the present disclosure, determining the off ramp task reliability $F(N)$ for dynamic traffic based on the number of the safety spaces may include:
if the number N of the safety spaces is greater, determining that the off ramp task reliability $F(N)$ for dynamic traffic is greater.
Here, the intelligent driving system may decide the number N of the safety spaces for lane changing after comprehensively considering the motion constraint of the ego vehicle and the influence on another vehicle according to the perceptual fusion and target tracking data, such as the speed and locations of the vehicles in front and rear and in the lane beside, the average value of traffic density (the number of vehicles), etc., so as to obtain the off ramp task reliability $F(N)$ for dynamic traffic. As shown in FIG. 4, the safety space refers to the space into which the vehicle may travel by lane changing in the adjacent lane. The size of each safety space is slightly larger than that of the vehicle's body.
The more N is, the larger $F(N)$ is.
In some embodiments of the present disclosure, step S24 may include:

determining the reliability F of the intelligent driving system based on the following formula:

$$F = k_1 * F(X_n) + k_2 * F(N);$$

wherein $k_1$ represents the influence weight of $F(X_n)$ on the reliability F of the intelligent driving system; and $k_2$ represents the influence weight of $F(N)$ on the reliability F of the intelligent driving system.
$k_1$ and $k_2$ may dynamically change as the vehicle position $\alpha$. $\alpha$ is the position of the vehicle located, which may represent the lane where the vehicle is located and the distance from the latest merging point.

In this embodiment, the weights of the two dimensions of static factor and dynamic traffic change in real-time as the lane where the vehicle is located or the distance from the latest merging point, for example, the static environment will have a greater influence in the early stage, and the dynamic traffic will have a greater influence in the later stage, so as to obtain a more accurate and comprehensive off ramp task reliability.
In some embodiments of the present disclosure, after determining the reliability of the intelligent driving system, the method may further include:

determining the reminder manner corresponding to the reliability; and
releasing the reminder notification based on the determined reminder manner.

In some embodiments, the reliability is prompted to the driver in a quantifiable manner such as a percentage value, a level, or the like, wherein in the cases of different levels of reliability, the interaction manner with the driver may be different. When the level of reliability is higher, the intensity of interaction with the driver is weaker, and when the level of reliability is lower, the intensity of interaction with the driver is stronger, thereby improving the effective communication of human-machine co-driving. It can be implemented to remind the driver to pay attention to the road condition by different interaction manners.

As shown in FIG. 2, the reliability calculating module may output the comprehensive level of reliability to the interacting module, and the interacting module may apply different reminding manners according to different levels of reliability in different scenes.

For example, for the high level of reliability, the interaction may mainly adopt a visual prompt, and the driver is notified of the level of reliability by the icons or animations.

For the low level of reliability, depending on the specific scene, there are different prompting manners, such as the prompt sound, the voice, the strong visual reminder, and the like.

In some embodiments, there may also be a smooth animation transition between reminding notifications with different levels of reliability.

The reliability may be prompted to the driver by way of percentage or different levels. Taking 3 levels as an example: Level 3 represents that the system may handle successfully in this scene so as to increase the driver's confidence; Level 2 represents that the system may handle successfully or fail in this scene, so as to invite the driver's attention; Level 1 represents that the system has a high probability to fail in this scene, and the driver needs to pay attention to the road condition all the time.

According to another aspect of the present disclosure, a computer readable medium is further provided, on which computer readable instructions are stored. The computer readable instructions are executable by the processor to implement the method described in any of the foregoing embodiments. For example, in some embodiments, the executable instructions are executable by the processor to:

acquire at least one of the vehicle operating status data, the navigation route information, the perception fusion and target tracking data, and the high-precision map fusion information of the intelligent driving system of the vehicle; and determine the reliability of the intelligent driving system based on at least one of the vehicle operating status data, the navigation route information, the perception fusion and target tracking data, and the high-precision map fusion information.

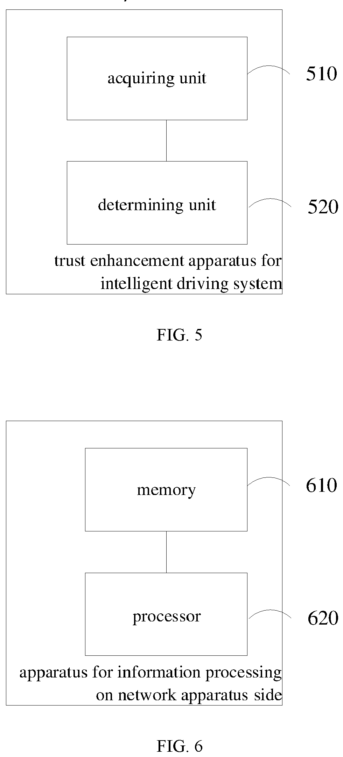

According to another aspect of the present disclosure, as shown in FIG. 5, a trust enhancement apparatus for an intelligent driving system is further provided, including:

the acquiring unit 510, configured to acquire at least one of the vehicle operating status data, the navigation route information, the perception fusion and target tracking data, and the high-precision map fusion information of the intelligent driving system of the vehicle; and the determining unit 520, configured to determine the reliability of the intelligent driving system based on at least one of the vehicle operating status data, the navigation route information, the perception fusion and target tracking data, and the high-precision map fusion information.

According to another aspect of the present disclosure, as shown in FIG. 6, an apparatus for information processing on a network apparatus side is further provided, including the memory 610 for storing computer program instructions and the processor 620 for executing program instructions, wherein the computer program instructions trigger the apparatus to execute the method described in any of the foregoing embodiments when being executed by the processor 620. For example, in some embodiments, when being executed, the executable instructions may cause the processor 620 to:

acquire at least one of the vehicle operating status data, the navigation route information, the perception fusion and target tracking data, and the high-precision map fusion information of the intelligent driving system of the vehicle; and determine the reliability of the intelligent driving system based on at least one of the vehicle operating status data, the navigation route information, the perception fusion and target tracking data, and the high-precision map fusion information.

According to another aspect of the present disclosure, a computer program product is further provided. The computer program product includes the computer executable instructions, wherein the computer executable instructions cause the processor to implement the method described above when being executed by the processor. For example, in some embodiments, when being executed, the executable instructions may cause the processor to:

acquire at least one of the vehicle operating status data, the navigation route information, the perception fusion and target tracking data, and the high-precision map fusion information of the intelligent driving system of the vehicle; and determine the reliability of the intelligent driving system based on at least one of the vehicle operating status data, the navigation route information, the perception fusion and target tracking data, and the high-precision map fusion information.

The details of the embodiments of various apparatuses in the present disclosure may be found in corresponding parts of the embodiments of various methods, and will not be repeated herein.

Apparently, those skilled in the art may change and modify the present application variously without departing from the spirit and the range of the present application. As such, if these change and modify of the present application belong to the range of the claims and their equivalents of the present application, they are intended to be included in the present application.

It should be noted that the present disclosure may be implemented in software and/or in a combination of software and hardware, for example, an application specific integrated circuit (ASIC), a general purpose computer, or any other similar hardware apparatus may be utilized for implementations. In some embodiments, the software program of the present disclosure may be executed by a processor to implement the steps or functions described above. Likewise, the software program (including related data structures) of the present disclosure may be stored in a computer-readable recording medium, for example, RAM memory, magnetic or optical driver, or floppy disk and the similar apparatuses. In addition, some steps or functions of the present disclosure may be implemented by hardware, for example, a circuit that cooperates with a processor to perform various steps or functions.

In addition, a part of the present disclosure may be applied as a computer program product, for example, computer program instructions. When the computer program instructions are executed by a computer, the method and/or technical solution according to the present disclosure may be invoked or provided by the operations of the computer. The program instructions that invoke the method of the present disclosure may be stored in a fixed or removable recording medium and/or transmitted by data stream in broadcast or other signal carrying medium, and/or stored in the work memory of the computer apparatus which is run according to the program instructions. Here, according to some embodiments of the present disclosure, an apparatus is included. The apparatus includes a memory for storing computer program instructions and a processor for executing the program instructions. When the computer program instructions are executed by the processor, the apparatus is triggered to run the methods and/or technical solutions of a plurality of embodiments of the present disclosure describe above.

For those skilled in the art, it is obvious that the present disclosure is not limited to the details of the above mentioned exemplary embodiments, and the present disclosure may be implemented in other specific forms without departing from the spirit or basic features of the present disclosure. Therefore, for all intents, the embodiments should be regarded as exemplary but not restrictive. The scope of the present disclosure is defined by the appended claims rather than the above mentioned description, therefore, all changes fall within the meaning and scope of equivalent elements of the claims should be included in the present disclosure. Any reference numerals in the claims should not be regarded as limits to the involved claims. Additionally, it is obvious that the term "include/comprise" does not exclude other units or steps, and the singular does not exclude the plural. The plurality of units or apparatuses recited in the claims of apparatus may also be implemented by a unit or apparatus by software or hardware. Terms such as first, second, etc. are used to indicate names rather than any specific order.

## Claims

1. A trust enhancement method for an intelligent driving system, comprising:

    acquiring at least one of vehicle operating status data, navigation route information, perception fusion and target tracking data, and high-precision map fusion information of the intelligent driving system of a vehicle; and
    determining a reliability of the intelligent driving system based on the at least one of the vehicle operating status data, the navigation route information, the perception fusion and target tracking data, and the high-precision map fusion information.

2. The method according to claim 1, wherein determining the reliability of the intelligent driving system based on the at least one of the vehicle operating status data, the navigation route information, the perception fusion and target tracking data, and the high-precision map fusion information comprises:

    calculating an earliest merging point and a latest merging point in each lane for the vehicle in a scene where a main road merges into a ramp, based on the vehicle operating status data, the navigation route information, and the high-precision map fusion information;
    when the vehicle travels in a lane to the earliest merging point in the lane, determining an off ramp task reliability for static factor based on the latest merging point in the lane;
    determining a number of safety spaces where the vehicle changes from a current lane to an adjacent lane based on the perception fusion and target tracking data and the vehicle operating status data, and determining an off ramp task reliability for dynamic traffic based on the number of the safety spaces; and

determining the reliability of the intelligent driving system based on the off ramp task reliability for static factor and the off ramp task reliability for dynamic traffic.

3. The method according to claim 2, wherein calculating the earliest merging point and the latest merging point in each lane for the vehicle in the scene where the main road merges into the ramp, based on the vehicle operating status data, the navigation route information, and the high-precision map fusion information comprises:

acquiring a navigation destination, and obtaining the navigation route information based on the navigation destination and a high-precision map; and
obtaining the high-precision map fusion information according to the navigation route information and the vehicle operating status data, and calculating the earliest merging point and the latest merging point in each lane for the vehicle in the scene where the main road merges into the ramp based on the high-precision map fusion information.

4. The method according to claim 3, wherein calculating the latest merging point in each lane for the vehicle in the scene where the main road merges into the ramp based on the high-precision map fusion information comprises:

obtaining a lane location, a number of lanes, a distance from the vehicle to a ramp junction, an experienced vehicle speed in each lane, average lane changing time for each lane, and a shortest interval time between two lane changes for each lane based on the high-precision map fusion information; and
calculating the latest merging point in each lane for the vehicle in the scene where the main road merges into the ramp based on the lane location, the number of the lanes, the distance from the vehicle to the ramp junction, the experienced vehicle speed in each lane, the average lane changing time for each lane, and the shortest interval time between the two lane changes for each lane.

5. The method according to claim 4, wherein calculating the latest merging point in each lane for the vehicle in the scene where the main road merges into the ramp based on the lane location, the number of the lanes, the distance from the vehicle to the ramp junction, the experienced vehicle speed in each lane, the average lane changing time for each lane, and the shortest interval time between the two lane changes for each lane comprises:

calculating a distance $X_{min,n}$ from the latest merging point in each lane for the vehicle in the scene where the main road merges into the ramp to the ramp junction by following formula:

$$X_{min,n} = \sum_{i=1}^{n} S_i + \sum_{i=1}^{n-1} \Delta S_i;$$

$$S_n = V_n * t_1;$$

$$\Delta S_n = V_n * t_2;$$

where n represents a serial number of a lane, $t_1$ is the average lane changing time of the vehicle, $t_2$ is the shortest interval time between the two lane changes, and $v_i$ is the experienced vehicle speed in lane i.

6. The method according to claim 3, wherein calculating the earliest merging point in each lane for the vehicle in the scene where the main road merges into the ramp based on the high-precision map fusion information comprises:

obtaining a length of a ramp junction passage, an intelligent driving style influence coefficient and a navigation traffic congestion information influence coefficient based on the high-precision map fusion information; and
calculating the earliest merging point in each lane for the vehicle in the scene where the main road merges into the ramp based on the length of the ramp junction, the intelligent driving style influence coefficient, and the navigation traffic congestion information influence coefficient.

7. The method according to claim 6, wherein calculating the earliest merging point in each lane for the vehicle in the scene where the main road merges into the ramp based on the length of the ramp junction, the intelligent driving style influence coefficient, and the navigation traffic congestion information influence coefficient comprises:

calculating a distance $X_{max,n}$ from the earliest merging point in each lane for the vehicle in the scene where the main road merges into the ramp to the ramp junction by following formula:

$$X_{max,n} = \sum_{i=1}^{n-1} S_i' * K_{intelligent\ driving\ style} * K_{congestion} + S_{exit};$$

where $n$ represents a serial number of a lane, $S_{exit}$ is the length of the ramp junction passage; $K_{intelligent\ driving\ style}$ is the intelligent driving style influence coefficient, $K_{intelligent\ driving\ style}$ represents an influence coefficient of the intelligent driving style on $S_i'$ ; $K_{congestion}$ is the navigation traffic congestion information influence coefficient, $K_{congestion}$ represents an influence coefficient of the navigation traffic congestion information on $S_i'$ ; and $S_i'$ is an earliest lane changing distance that needs to be advanced to change from a current lane to an adjacent lane on right.

8. The method according to claim 2, wherein when the vehicle travels in the lane to the earliest merging point in the lane, determining the off ramp task reliability for static factor based on the latest merging point in the lane comprises:

obtaining a current vehicle speed of the vehicle and a real-time distance from the latest merging point in the lane currently located based on the vehicle operating status data, the navigation route information, and the high-precision map fusion information; and
determining the off ramp task reliability for static factor based on the current vehicle speed of the vehicle and the real-time distance from the latest merging point in the lane currently located.

9. The method according to claim 8, wherein determining the off ramp task reliability for static factor based on the current vehicle speed of the vehicle and the real-time distance from the latest merging point in the lane currently located comprises:

determining the off ramp task reliability $F(X_n)$ for static factor based on following formula:

$$TTC_n = \frac{X_n}{v};$$

wherein $X_n$ represents the real-time distance of the vehicle from the latest merging point in the lane currently located;
$v$ represents the current vehicle speed of the vehicle;
the larger $TTC_n$ is, the larger $F(X_n)$ is, and the smaller the $TTC_n$ is, the smaller $F(X_n)$ is.

10. The method according to claim 2, wherein determining the off ramp task reliability $F(N)$ for dynamic traffic based on the number of the safety spaces comprises:
if the number N of the safety spaces is greater, determining that the off ramp task reliability $F(N)$ for dynamic traffic is greater.

11. The method according to claim 2, wherein determining the reliability of the intelligent driving system based on the off ramp task reliability for static factor and the off ramp task reliability for dynamic traffic comprises:

determining the reliability F of the intelligent driving system based on following formula:

$$F = k_1 * F(X_n) + k_2 * F(N);$$

wherein $k_1$ represents an influence weight of $F(X_n)$ on the reliability F of the intelligent driving system; and
$k_2$ represents an influence weight of $F(N)$ on the reliability F of the intelligent driving system.

12. A computer readable medium, on which computer readable instructions are stored, wherein the computer readable instructions are executable by a processor to implement the method according to any one of claims 1-11.

**13.** An apparatus for information processing on a network apparatus side, comprising a memory for storing computer program instructions and a processor for executing program instructions, wherein the computer program instructions trigger the apparatus to execute the method according to any one of claims 1-11 when being executed by the processor.

**14.** A trust enhancement apparatus for an intelligent driving system, comprising:

an acquiring unit, configured to acquire at least one of vehicle operating status data, navigation route information, perception fusion and target tracking data, and high-precision map fusion information of the intelligent driving system of a vehicle; and
a determining unit, configured to determine a reliability of the intelligent driving system based on the at least one of the vehicle operating status data, the navigation route information, the perception fusion and target tracking data, and the high-precision map fusion information.

**15.** A computer program product, comprising computer program instructions, wherein the computer program instructions implement the method according to any one of claims 1-11 when being executed by a processor.

acquiring at least one of the vehicle operating status data, the navigation route information, the perception fusion and target tracking data, and the high-precision map fusion information of the intelligent driving system of a vehicle — S1

determining the reliability of the intelligent driving system based on at least one of the vehicle operating status data, the navigation route information, the perception fusion and target tracking data, and the high-precision map fusion information — S2

FIG. 1

vehicle body data

Navigation data

perception fusion & target tracking

high-precision map fusion

reliability

interacting module

FIG. 2

calculating the earliest merging point and the latest merging point in each lane for the vehicle in the scene where the main road merges into the ramp, based on the vehicle operating status data, the navigation route information, and the high-precision map fusion information | S21

when the vehicle travels in the lane to the earliest merging point in the lane, determining the off ramp task reliability F(Xn) for static factor based on the latest merging point in the lane | S22

determining the number of safety spaces where the vehicle changes from the current lane to the adjacent lane based on the perception fusion and target tracking data and the vehicle operating status data, and determining the off ramp task reliability F(N) for dynamic traffic based on the number of the safety spaces | S23

determining the reliability of the intelligent driving system based on the off ramp task reliability F(Xn) for static factor and the off ramp task reliability F(N) for dynamic traffic | S24

FIG. 3

FIG. 4

acquiring unit — 510

determining unit — 520

trust enhancement apparatus for intelligent driving system

FIG. 5

memory — 610

processor — 620

apparatus for information processing on network apparatus side

FIG. 6

Europäisches
Patentamt

European
Patent Office

Office européen
des brevets

## EUROPEAN SEARCH REPORT

Application Number

EP 22 21 6936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/107528 A1 (FUJITA KAZUYUKI [JP] ET AL) 15 April 2021 (2021-04-15) | 1,12-15 | INV. B60W60/00 |
| A | * paragraphs [0106] - [0114] * | 2 | |
| X | US 2021/061312 A1 (WANG MINGYU [CN]) 4 March 2021 (2021-03-04) * paragraph [0038] * | 1,12-15 | |
| X | US 2020/307594 A1 (KATO DAICHI [JP] ET AL) 1 October 2020 (2020-10-01) | 1,12-15 | |
| A | * paragraphs [0076] - [0088]; figure 3 * | 2 | |
| A | US 2019/317506 A1 (ISHIOKA ATSUSHI [JP]) 17 October 2019 (2019-10-17) * paragraphs [0043], [0062] - [0067]; figure 3 * | 2 | |

TECHNICAL FIELDS SEARCHED (IPC)

B60W

The present search report has been drawn up for all claims

| Place of search | Date of completion of the search | Examiner |
|---|---|---|
| Munich | 13 October 2023 | Plenk, Rupert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6936

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2023

| Patent document cited in search report | | | Publication date | Patent family member(s) | | | Publication date |
|---|---|---|---|---|---|---|---|
| US 2021107528 | A1 | | 15-04-2021 | CN | 112660156 | A | 16-04-2021 |
| | | | | JP | 7207256 | B2 | 18-01-2023 |
| | | | | JP | 2021062780 | A | 22-04-2021 |
| | | | | US | 2021107528 | A1 | 15-04-2021 |
| US 2021061312 | A1 | | 04-03-2021 | CN | 111386217 | A | 07-07-2020 |
| | | | | US | 2021061312 | A1 | 04-03-2021 |
| | | | | WO | 2020181421 | A1 | 17-09-2020 |
| US 2020307594 | A1 | | 01-10-2020 | CN | 111762113 | A | 13-10-2020 |
| | | | | JP | 7043450 | B2 | 29-03-2022 |
| | | | | JP | 2020163908 | A | 08-10-2020 |
| | | | | US | 2020307594 | A1 | 01-10-2020 |
| US 2019317506 | A1 | | 17-10-2019 | CN | 110099834 | A | 06-08-2019 |
| | | | | JP | 6817334 | B2 | 20-01-2021 |
| | | | | JP | WO2018122966 | A1 | 27-06-2019 |
| | | | | US | 2019317506 | A1 | 17-10-2019 |
| | | | | WO | 2018122966 | A1 | 05-07-2018 |

EPO FORM P0459

For more details about this annex : see Official Journal of the European Patent Office, No. 12/82

**EP 4 289 699 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210641992